# EUROPÄISCHE PATENTSCHRIFT

(11) **EP 0 276 465 B1**
(45) Veröffentlichungstag und Bekanntmachung des Hinweises auf die Patenterteilung: **17.02.1993**
(21) Anmeldenummer: 87119001.3
(22) Anmeldetag: 22.12.1987
(51) Int. Cl.: C08J 9/40

(54) **Verfahren zur Herstellung von leichten, flächigen Formteilen unter Verwendung von wässrigen Dispersionen oder Emulsionen aus NCO-Gruppen aufweisenden organischen Verbindungen sowie durch das Verfahren hergestellte Formteile**
Process for producing light flat articles using aqueous dispersions or emulsions of organic compounds containing NCO groups, and the articles thus prepared
Procédé pour préparer des articles plats et légers à partir de dispersion ou émulsions aqueuses de composés organiques contenant des groupes NCO et les articles ainsi préparés

(30) Priorität: 07.01.1987 DE 3700245
(43) Veröffentlichungstag der Anmeldung: 03.08.1988
(73) Patentinhaber: BASF Aktiengesellschaft, 67063 Ludwigshafen (DE)
(72) Erfinder: Scherzer, Dietrich, Dr., Radcliff-on-Trent Nottingham NG12 2JG (GB); Zahn, Erwin, Dr., D-6730 Neustadt (DE); Frank, Wolfram, Dr., D-6900 Heidelberg (DE)

(56) Entgegenhaltungen:
- FR-A- 2 545 039
- GB-A- 984 300
- GB-A- 1 502 777
- GB-A- 2 096 653
- DATABASE WPIL (DERWENT), Nr. 86-165203(26), Derwent Publications Ltd, London, GB

## Beschreibung

Großflächige, dünnwandige Formteile niedriger Dichte, insbesondere solche mit komplizierten Raumformen, können üblicherweise nicht nach dem Polyisocyanat-polyadditionsverfahren durch Formverschäumung hergestellt werden, da eine vollständige und gleichmäßige Füllung der im wesentlichen geschlossenen Formwerkzeuge mit den relativ hochviskosen Polyurethansystemen nicht oder nur schwer erzielbar ist.

Aber auch nach anderen bekannten Verfahrenstechniken hergestellte Formteile genügen vielfach nicht den wirtschaftlichen Erfordernissen; sei es, daß die Herstellungsverfahren technisch aufwendig und daher kostspielig sind oder die mechanische Stabilität der hergestellten Formteile nicht den technischen Anforderungen in allen Eigenschaften genügt.

Flächige, faserhaltige, zellige Polyurethan-Verbundkörper mit einer Dicke von 1 bis 20 mm, einer Dichte von 0,1 bis 1,6 g/cm³ und guten mechanischen Eigenschaften werden beschrieben in der DE-A-33 15 804. Zur Herstellung der Verbundkörper wird ein faserhaltiges Flächengebilde in ein offenes Formwerkzeug eingelegt, mit einer solchen Menge einer schäumfähigen Polyurethan-Duromermischung beschichtet, daß das Gewichtsverhältnis von faserhaltigem Flächengebilde zu schäumfähiger Polyurethanmischung 51 bis 80 zu 49 bis 20 beträgt und die Duromermischung anschließend in dem geschlossenen Formwerkzeug verschäumt. Die Polyurethan-Verbundkörper besitzen isotrope mechanische Eigenschaften, jedoch für manche Anwendungsgebiete eine zu hohe Dichte.

Nach Angaben der EP-A-118 876 werden thermisch verformbare Polyurethan-Schaumstoffplatten mit einer Dicke von 2 bis 200 mm und einer Dichte von 15 bis 400 g/l, hergestellt auf Basis von aromatischen Polyisocyanaten und Polyester-polyolen, in einem Formwerkzeug mit einem Verdichtungsgrad von 1 bis 10 bei Temperaturen von 140 bis 200°C thermoplastisch verformt. Nach diesem Verfahren können selbsttragende großflächige Formteile mit komplizierten Raumformen mit niedrigen Dichten konturengenau, schnell in großen Stückzahlen hergestellt werden. Das für gewisse Anwendungsgebiete zu kostenintensive Verfahren gestattet jedoch nur die Verarbeitung von thermoformbaren Polyesterpolyurethan-Schaumstoffen.

Leichte, biegsame oder steife, tafelförmige Elements können gemäß DE-A-32 13 610 (US 4,451,310) hergestellt werden durch Imprägnieren eines biegsamen porösen Materials mit einer Lösung einer Isocyanatverbindung in einem chlorierten organischen Lösungsmittel. Ausdrücken der überschüssigen Menge Isocyanatlösung und Reaktion der Isocyanatverbindung mit Wasser unter Bildung von Harnstoff- oder Biuret-Derivaten. Durch den Einsatz organischer Lösungsmittel zur Herstellung der Polyisocyanatlösung und ihrer zumindest partielle Rückführung wird das Verfahren apparativ aufwendig und kostenintensiv.

Bekannt sind ferner wäßrige Isocyanat-Emulsionen für die Verleimung von Spanplatten, die z.B. beschrieben werden in den deutschen Offenlegungsschriften 27 03 271, 27 24 363 und 27 24 364.

GB 1 502 777 beschreibt die Verwendung von wässrigen Diphenylmethandiisocyanat-Emulsionen zur Herstellung von Flockenverbundschaum, d.h. es werden unter Druck Polyurethanschaumstoff-Flocken aus Abfällen zu Formkörpern verklebt. Die dadurch erhaltenen Formkörper zeichnen sich durch inhomogene und auch häufig schlechte mechanische Eigenschaften aus. Die Formkörper werden hauptsächlich als Füll- und Verstärkungsmaterialien im Möbelbau genutzt.

In J 61 097 315 werden wässrige Diphenylmethandiisocyanat-Emulsionen als Bindemittel und Klebstoffe beschrieben. Wie in den vorstehend zitierten deutschen Offenlegungsschriften und in GB 1 502 777 wird die Verwendung der Emulsionen als Bindemittel zur Herstellung von Spanplatten und von Flockenverbundschaum genannt.

Die Aufgabe der vorliegenden Erfindung bestand darin, ein verbessertes, kostengünstiges Verfahren zur Herstellung von leichten, vorzugsweise großflächigen Formteilen zu entwickeln, das die obengenannten Nachteile qanz oder zumindest teilweise überwindet und die umweltfreundliche Herstellung leichter Formteile ermöglicht.

Diese Aufgabe konnte durch die Verwendung von Dispersionen oder vorzugsweise Emulsionen von NCO-Gruppen aufweisenden organischen Verbindungen in Wasser gelöst werden.

Gegenstand der Erfindung ist somit ein Verfahren zur Herstellung von leichten, flächigen Formteilen durch Behandeln von flächigen, porösen Materialien mit einer wirksamen Menge einer NCO-Gruppen aufweisenden organischen Verbindung und Aushärten lassen der Isocyanatverbindung gegebenenfalls unter Formgebung, das dadurch gekennzeichnet ist, daß man die NCO-Gruppen aufweisende organische Verbindung in Form einer wäßrigen Dispersion oder Emulsion einsetzt.

Nach dem erfindungsgemäßen Verfahren sind flächige Polyurethan-Formteile mit einer Dicke von 0,1 bis 40 mm, vorzugsweise 3 bis 8 mm, einer Dichte von 0,015 bis 0,25 g/cm³, vorzugsweise 0,03 bis 0,08 g/cm³, einer Zugfestigkeit nach DIN 53 571 von 100 bis 500 k·Pa, einer Bruchdehnung nach DIN 53 571 von 10 bis 70 %, einer Stauchhärte bei 40 % Verformung nach DIN 53 577 von 10 bis 100 k·Pa und einer Wärmebiegefestigkeit nach DIN 53 424 von 100 bis 160°C, unter Verwendung von offenzelligen, flexiblen oder halbharten Polyurethan-Schaumstoffen als flächigen, porösen Materialien erhältlich.

Durch die Verwendung nicht entflammbarer, wäßriger Dispersionen oder Emulsionen anstelle von Lösungen aus organischen, gegebenenfalls modifizierten Polyisocyanaten und entflammbaren und/oder toxischen Lösungsmitteln bedarf es keiner explosionsgeschützter teuerer Vorrichtungen und Werksanlagen. Nichtbrennbare Lösungsmittel, wie z.B. chlorierte Kohlenwasserstoffe, sind aus toxikologischen Gründen ungeeignet. Auf einen strengen Feuchtigkeitsausschluß vor Abtrennung des organischen Lösungsmittels kann ebenso verzichtet werden wie auf Vorrichtungen zur Rückgewinnung des organischen Lösungsmittels. Die porösen Materialien können einstufig, gleichzeitig mit den NCO-Gruppen aufweisenden organischen Verbindungen und Wasser behandelt werden.

Zur Herstellung der leichten, flächigen, vorzugsweise großflächigen Formteile eignen sich wäßrige Dispersionen oder vorzugsweise wäßrige Emulsionen, die bei relativ niedrigen Temperaturen, z.B. bei Temperaturen unter 30°C für einen Zeitraum von z.B. 1 bis 12 Stunden als stabil anzusehen sind und, bezogen auf das Gesamtgewicht, enthalten: 5 bis 70 Gew.%, vorzugsweise 15 bis 40 Gew.%, mindestens eines organischen Polyisocyanats und/oder modifizierten organischen Polyisocyanates, 0 bis 28 Gew.%, vorzugsweise 0 bis 15 Gew.%, mindestens eines Emulgators und im übrigen Wasser, so daß die Summe der Bestandteile 100 % ergibt.

Als organische Polyisocyanate zur Herstellung der wäßrigen Dispersionen oder Emulsionen kommen z.B. aliphatische, cycloaliphatische und vorzugsweise aromatische mehrwertige Isocyanate in Frage. Im einzelnen seien beispielhaft genannt: 1,6-Hexamethylen-, 2-Methyl-1,5-pentamethylen-, 2-Ethyl-1,4-butylen-diisocyanat oder die entsprechenden Isomerengemische, 1-Isocyanato-3,3,5-trimethyl-3-isocyanatomethylcyclohexan, 1,3- und 1,4-Diisocyanato-cyclohexan, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, Mischungen aus 4,4'-, 2,2'- und 2,4'-Dicyclohexylmethan-diisocyanaten und Polymethylen-polycyclohexylen-polyisocyanaten, 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten.

Geeignet sind auch sogenannte modifizierte mehrwertige Isocyanate, d.h. Produkte die durch chemische Umsetzung obiger Di- und/oder Polyisocyanate erhalten werden. Genannt seien z.B. Ester-, Harnstoff-, Biuret-, Allophanat- und vorzugsweise Carbodiimid-, Isocyanurat- und/oder Urethangruppen enthaltende Di- und/oder Polyisocyanate. Beispiele solcher Polyisocyanate sind: Carbodiimid- und/oder Urethangruppen und/oder Isocyanuratringe enthaltende Polyisocyanate, z.B. aus Diphenylmethan-diisocyanat- und/oder Toluylen-diisocyanat-Isomeren sowie mit Dialkylen-, Trialkylen- und/oder Polyoxialkylen-glykolen auf Basis von Ethylenoxid und/oder 1,2-Propylenoxid mit Molekulargewichten bis 1800, vorzugsweise bis 1200, modifizierte Diphenylmethan-diisocyanate, vorzugsweise 4,4'-Diphenylmethan-diisocyanat und/oder Toluylen-diisocyanate.

Zur Herstellung der Dispersionen oder Emulsionen haben sich besonders bewährt und werden daher vorzugsweise Mischungen aus Diphenylmethan-diisocyanaten und Polyphenyl-polymethylen-polyisocyanaten mit einem NCO-Gehalt von 28 bis 32 Gew.% verwendet.

Sofern die erfindungsgemäß verwendbaren wäßrigen Dispersionen oder Emulsionen unmittelbar nach der Herstellung weiterverarbeitet werden, bedürfen sie keines Emulgatorzusatzes.

Zur Erhöhung der Gebrauchsdauer werden zweckmäßigerweise jedoch emulgatorhaltige Dispersionen oder Emulsionen verwendet. Als Emulgatoren eignen sich beispielsweise Polyvinylalkohole mit einem mittleren Molekulargewicht von 5.000 bis 100.000, Polyoxialkylen-polyole, vorzugsweise Polyoxialkylen-glykole, hergestellt durch Polyaddition von Ethylenoxid und/oder 1,2-Propylenoxid an ein Startermolekül mit 2 bis 6 reaktiven Wasserstoffatomen in Gegenwart basischer Katalysatoren, mit Molekulargewichten von 4.000 bis 20.000, vorzugsweise 6000 bis 16.000, wie z.B. Polyoxiethylenpolyole, Polyoxipropylen-polyole oder gemischte Polyoxiethylen-polyoxipropylen-polyole und/oder Polyvinylpyrrolidone mit einem mittleren Molekulargewicht von 3000 bis 1.000.000.

Erfindungsgemäß verwendbare wäßrige Dispersionen oder Emulsionen der NCO-Gruppen aufweisenden organischen Verbindungen können in an sich bekannter Weise durch Verrühren der Bestandteile in Wasser, zweckmäßigerweise bei Raumtemperatur, mit geeigneten Vorrichtungen hergestellt werden.

Insbesondere bewährt haben sich wäßrige Emulsionen, die bestehen aus 5 bis 70 Gew.%, vorzugsweise 15 bis 40 Gew.%, einer Mischung aus Diphenylmethan-diisocyanaten und Polyphenyl-polymethylen-polyisocyanaten mit einem NCO-Gehalt von 28 bis 32 Gew.%, 0 bis 28 Gew.%, vorzugsweise 0 bis 15 Gew.%, eines Emulgators aus der Gruppe der Polyoxyalkylen-polyole. Polyvinylpyrrolidone und/oder Polyvinylalkohole und einer solchen Menge Wasser, daß die Summe der Bestandteile 100 Gew.% ergibt.

Als flächige, poröse Materialien eignen sich saugfähige, flächige, Gebilde, wie z.B. Matten, Watten, Vliese, Gewebe oder Filze aus anorganischen Fasermaterialien wie z.B. Asbest-, Kohlenstoff-, Glasfasern oder Steinwolle oder natürlichen oder synthetischen organischen Fasermaterialien wie z.B: Jute, Hanf, Leine, Baumwolle, Wolle, Polyamiden, Polyacrylen oder Polyestern.

Als flächige, poröse Materialien besonders bewährt haben sich jedoch offenzellige, flexible oder halbharte, vorzugsweise hydrophile Schaumstoffe mit Dichten bis zu 200 g/l, vorzugsweise 10 bis 120 g/l und insbesondere 30 bis 60 g/l, wie z.B. Schaumstoffe aus Harnstoff- oder Melaminharzen, Olefinpolymerisaten, beispielsweise Latex, und Polyisocyanat-Polyadditionsprodukten, beispielsweise Polyharnstoffen, Polyharnstoff-polyurethanen und insbesondere Polyurethanen.

Die aufgrund des breiten Spektrums der mechanischen Eigenschaften, deren Variationsmöglichkeit und ihrer einfachen Zugänglichkeit als flächiges, poröses Material insbesondere verwendeten flexiblen bis halbharten, offenzelligen, vorzugsweise hydrophilen Polyurethanschaumstoffe können in an sich bekannter Weise durch Umsetzung von organischen, gegebenenfalls modifizierten Polyisocyanaten, höhermolekularen Polyhydroxylverbindungen mit mindestens zwei reaktiven Wasserstoffatomen und gegebenenfalls niedermolekularen Kettenverlängerungsmitteln in Gegenwart von Treibmitteln und Katalysatoren sowie gegebenenfalls Hilfsmitteln und/oder Zusatzstoffen hergestellt werden. Offenzellige Schaumstoffe, insbesondere Polyurethanschaumstoffe, im Sinne der Erfindung sind Schaumstoffe mit weniger als 20 %, vorzugsweise weniger als 10 % geschlossenen Zellen.

Zur Herstellung der halbharten oder vorzugsweise flexiblen, offenzelligen Polyurethan-Schaumstoffe werden bevorzugt die technisch gut zugänglichen aromatischen Di- und/oder höherwertigen Polyisocyanate verwendet. Beispielhaft genannt seien 2,4- und 2,6-Toluylen-diisocyanat sowie beliebige Gemische dieser Isomeren, 2,2'-, 2,4'- und 4,4'-Diphenylmethan-diisocyanat sowie beliebige Gemische dieser Isomeren, Mischungen aus 2,2'-, 2,4'- und 4,4'-Diphenylmethan-diisocyanaten, insbesondere solchen mit einem Gehalt an Diphenylmethan-diisocyanat-Isomeren von mehr als 50 Gew.%, und Mischungen aus Toluylen-diisocyanat-Isomeren und Roh-MDI.

Als Polyisocyanate geeignet sind auch sogenannte modifizierte mehrwertige Isocyanate, d.h. Produkte, die durch chemische Umsetzung obiger Polyisocyanate erhalten werden. Beispielhaft genannt seien Ester-, Harnstoff-, Biuret-, Allophanat- und vorzugsweise Carbodiimid- und/oder Urethangruppen enthaltende Di- und/oder höherwertige Polyisocyanate, wobei mit Di-, Tri- und/oder Polyoxialkylen-glykolen mit Molekulargewichten bis 1800, beispielsweise mit Polyoxipropylen-, Polyoxiethylen- und/oder Polyoxiethylen-polyoxipropylen-glykol modifizierte Produkte bevorzugt verwendet werden.

Als Polyhydroxylverbindungen werden vorteilhafterweise solche mit einer Funktionalität von 2 bis 3 und Hydroxylzahlen von 20 bis 180, vorzugsweise von 25 bis 80 verwendet.

Bewährt haben sich beispielsweise Polyester-polyole, die hergestellt werden aus Dicarbonsäuren, vorzugsweise aliphatischen Dicarbonsäuren, mit 2 bis 12, vorzugsweise 4 bis 6 Kohlenstoffatomen und mehrwertigen Alkoholen, vorzugsweise Diolen mit 2 bis 10, vorzugsweise 2 bis 6 Kohlenstoffatomen im Alkylenrest. Genannt seien beispielhaft aliphatische Dicarbonsäuren, wie Pimelinsäure, Korksäure, Azelainsäure, Sebacinsäure, Undecandisäure, Dodecandisäure, 2-Methyl-pentan-dicarbonsäure, 2-Ethyl-butan-dicarbonsäure und vorzugsweise Bernstein-, Glutar- und Adipinsäure oder Gemische aus mindestens zwei der genannten Dicarbonsäuren, und aromatische Dicarbonsäuren, wie Phthal-, Isophthal- und Terephthalsäure.

Beispiele für zwei- und mehrwertige, insbesondere zwei- und dreiwertige Alkohole sind: Ethylenglykol, Diethylenglykol, 1,2- bzw. 1,3-Propylenglykol, Dipropylenglykol, Butandiol, 2-Ethyl-butandiol, Pentandiol, 2-Methyl-pentandiol, Hexandiol, Decandiol, Glycerin und Trimethylolpropan. Sofern zur Herstellung der Polyester-polyole mehrwertige, insbesondere dreiwertige Alkohole mitverwendet werden, wird deren Gehalt zweckmäßigerweise so berechnet, daß die Funktionalität der erhaltenen Polyester-polyole maximal 2,6 ist. Die Polyester-polyole besitzen vorzugsweise Hydroxylzahlen von 25 bis 60.

Vorzugsweise verwendet werden Polyester-polyole auf Basis von Adipinsäure-Diethylenglykol-Glycerin, Adipinsäure-Propylenglykol, Adipinsäure-Ethylenglykol-Diethylenglykol. Mischungen aus Bernstein-, Glutar- und Adipinsäure-Diethylenglykol-Glycerin oder Trimethylolpropan, Adipinsäure-Mischungen aus 1,4-Butylen-, 1,5-Pentamethylen- und 1,6-Hexamethylenglykol und insbesondere Polyester-polyole, hergestellt aus Adipinsäure-Diethylenglykol-Trimethylolpropan, Adipinsäure-Phthalsäure-1,3-Propylenglykol-Trimethylolpropan, Adipinsäure-Phthalsäure-Olsäure-Trimethylolpropan und Adipinsäure-Glutarsäure-Bernsteinsäure-Diethylenglykol- oder Trimethylolpropan. Die Polyester-polyole können einzeln oder in Form von Mischungen eingesetzt werden.

Vorzugsweise als Polyhydroxylverbindungen verwendet werden jedoch Polyether-polyole, die nach bekannten Verfahren beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren oder durch kationische Polymerisation mit Lewissäuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 bis 3 reaktive Wasserstoffatome gebunden enthält, hergestellt werden.

Geeignete Alkylenoxide sind beispielsweise Tetrahydrofuran, 1,3-Propylenoxid 1,2- bzw. 2,3-Butylenoxid, und vorzugsweise Ethylenoxid und insbesondere 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie z.B. Bernstein-, Adipin-, Phthal- und/oder Terephthalsäure und vorzugsweise mehrwertige, insbesondere zwei- und/oder dreiwertige Alkohole, wie z.B. Ethylen-, Propylen-1,2- und -1,3-, Diethylen-, Dipropylen-, Butylen-1,4-, Hexamethylen-1,6-glykol, Glycerin, Trimethylol-ethan, -propan und Pentaerythrit. Die Polyether-polyole können ebenso wie die Polyester-polyole einzeln oder in Form von Mischungen verwendet werden.

Vorzugsweise Anwendung finden di- und/oder trifunktionelle Polyether-polyole mit Hydroxylzahlen von 25 bis 80 auf Basis von Polyoxipropylen-polyoxiethylen-polyolen, wobei zur Herstellung hydrophiler Schaumstoffe insbesondere Polyoxipropylen-polyoxiethylen-polyole eingesetzt werden, die mehr als 50 Gew.%, vorzugsweise mehr als 65 Gew.% Oxiethyleneinheiten mittel- und/oder endständig gebunden aufweisen.

Zur Variation der mechanischen Eigenschaften der Polyurethan-Schaumstoffe können den schaumfähigen Reaktionsmischungen gegebenenfalls auch Kettenverlängerungsmittel einverleibt werden. Geeignete Kettenverlängerungsmittel besitzen Molekulargewichte von vorzugsweise 60 bis 300 und sind vorteilhafterweise di- oder trifunktionell. In Betracht kommen als Kettenverlängerungsmittel beispielsweise dreiwertige Alkohole, wie z.B. Trimethylolpropan und Glycerin, und araliphatische Glykole oder Glykolether mit 2 bis 14, vorzugsweise 2 bis 6 Kohlenstoffatomen, wie z.B. Bis-(2-hydroxyethyl)-hydrochinon, 1,3- bzw. 1,2-Propandiol, 2,3-Butandiol, 1,5-Pentandiol, 1,6-Hexandiol und vorzugsweise Ethandiol, 1,4-Butandiol, Diethylenglykol und Dipropylenglykol. Das Gewichtsverhältnis von Polyhydroxylverbindung zu Kettenverlängerungsmittel ist abhängig von den gewünschten mechanischen Eigenschaften des Endproduktes und kann in den Grenzen von 0 bis 200 Gew.%, vorzugsweise 0 bis 150 Gew.%, bezogen auf das Gewicht der Polyhydroxylverbindungen, variiert werden.

Zur Herstellung der Polyurethan-Schaumstoffe werden die organischen Polyisocyanate und Polyhydroxylverbindungen sowie gegebenenfalls Kettenverlängerungsmittel in solchen Mengen zur Reaktion gebracht, daß das Verhaltnis von NCO-Gruppen zur Summe der Hydroxylgruppen 0,3 bis 3,0:1 beträgt, wobei zur Herstellung von hydrophilen Polyurethan-Schaumstoffen NCO-:OH-Gruppenverhältnisse von 0,3 bis 1:1 bevorzugt angewandt werden.

Zu den Treibmitteln, welche zur Herstellung der offenzelligen Polyurethan-Schaumstoffe verwendet werden, gehört Wasser, das mit den Isocyanatgruppen unter Bildung von Kohlendioxid reagiert. Die Wassermengen, die zweckmäßigerweise eingesetzt werden, betragen 0,2 bis 12 Gew.%, vorzugsweise 4 bis 8 Gew.%, bezogen auf das Gewicht der Polyhydroxylverbindung.

Andere verwendbare Treibmittel, die gegebenenfalls zusätzlich mitverwendet werden, sind niedrigsiedende Flüssigkeiten, die unter dem Einfluß der exothermen Polyadditionsreaktion verdampfen. Geeignet sind Flüssigkeiten, welche gegenüber den organischen Polyisocyananten inert sind und Siedepunkte von nicht über 100°C bei Atmosphärendruck, vorzugsweise zwischen 20 und 100°C aufweisen. Beispiele derartiger, vorzugsweise verwendeter Flüssigkeiten sind halogenierte Kohlenwasserstoffe, wie z.B. Methylenchlorid, Chloroform, Trichlorfluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Polyurethan-Schaumstoffe hängt ab von der Dichte, die man erreichen will, sowie von der verwendeten Wassermenge. Im allgemeinen liefern Mengen von 0 bis 50 Gew.%, vorzugsweise 4 bis 30 Gew.%, bezogen auf das Gewicht der Polyhydroxylverbindungen, gute Ergebnisse.

Vorzugsweise als Treibmittel verwendet wird Wasser oder Mischungen aus Wasser und den genannten Chlorfluorkohlenwasserstoffen, insbesondere Trichlorfluormethan.

Geeignete Katalysatoren zur Beschleunigung der Reaktion zwischen den höhermolekularen Polyhydroxylverbindungen, Wasser, gegebenenfalls Kettenverlängerungsmittel und den organischen Polyisocyanaten sind beispielsweise tertiäre Amine, wie z.B. Dimethylbenzylamin, N,N,N',N'-Tetramethyl-diamino-diethylether, Bis-(dimethylaminopropyl)-harnstoff, Dimethylaminoethylethanolamin, N-Methyl- bzw. N-Ethylmorpholin, Dimethylpiperazin, N,N'-Bis-(dimethylaminoethyl)-piperazin, 1-(2-Hydroxiethyl)-piperazin, 1,2-Dimethylimidazol, 1-Aza-bicyclo-(3,3,0)-octan und vorzugsweise Triethylendiamin, Metallsalze, wie z.B. Zinndioctoat, Bleioctoat, Zinndiethylhexoat und vorzugsweise Zinn-(II)-salze und Dibutylzinndilaurat sowie insbesondere Mischungen aus tertiären Aminen und organischen Zinnsalzen. Vorzugsweise verwendet werden 0,1 bis 2 Gew.% Katalysator auf Basis tertiärer Amine und/oder 0,01 bis 0,2 Gew.% Metallsalze, bezogen auf das Gewicht der Polyhydroxylverbindung.

Den schaumfähigen Reaktionsgemischen können ferner gegebenenfalls Hilfsmittel und Zusatzstoffe, wie sie üblicherweise zur Herstellung von Polyurethanschaumstoffen Anwendung finden, einverleibt werden. In Betracht kommen beispielsweise oberflächenaktive Stoffe, Flammschutzmittel, Porenregler, Antioxidationsmittel, Hydrolyseschutzmittel, Farbstoffe, Füllstoffe und andere Zusätze. Nähere Angaben über die obengenannten und andere üliche Hilfsmittel und Zusatzstoffe sind der Fachliteratur, beispielsweise der Monographie "High Polymers", Band XVI, Polyurethanes, Teil 1 und 2, von J.H. Saunders und K.C. Frisch, Verlag Interscience Publishers 1962 bzw. 1964 oder dem Kunststoff-Handbuch, Band VII, "Polyurethane", 1. Auflage 1966 herausgegeben von R. Vieweg und A. Höchtlen oder 2. Auflage 1983, herausgegeben von G. Oertel, Verlag Carl Hanser, München, zu entnehmen.

Je nach Art der gewünschten mechanischen Eigenschaften, wie z.B. Dämpfung, Rückstellvermögen, Hydrolysestabilität, Schallabsorptionsvermögen, Isolationsvermögen, Thermoformbarkeit und dergleichen werden durch geeignete Auswahl der Ausgangsstoffe nach bekannten Methoden, z.B. kontinuierlich auf üblichen Blockschaumanlagen oder diskontinuierlich in offenen Formwerkzeugen offenzellige, halbharte oder vorzugsweise flexible, insbesondere hydrophile Polyurethan-Blockschaumstoffe mit Dichten von vorzugsweise 0,01 bis 0,12 g/cm³, insbesondere 0,03 bis 0,06 g/cm³ hergestellt.

Aus den erhaltenen Polyurethan-Schaumstoffblöcken, die Größen bis zu 60 x 2 x 1 m erreichen können, oder den offenzelligen, halbharten oder vorzugsweise flexiblen, insbesondere hydrophilen Schaumstoffen aus anderen Materialien, werden, falls erforderlich, entsprechend den herzustellenden Formteilen dimensionierte Schaumstoffblöcke geschnitten, die, möglichst abfall- und staubfrei, in Schaumstoffplatten mit einer Dicke von 2 mm bis 200 mm, vorzugsweise 3 bis 100 mm und insbesondere 5 bis 40 mm gespalten werden. Hierzu geeignet sind alle technisch üblichen Spaltvorrichtungen, wobei in der Praxis vorzugsweise Oszillator-Heißdrahtschneidgatter verwendet werden. Beachtet werden sollte hierbei lediglich, daß insbesondere die großformatigen Schaumstoffplatten eine genügend hohe mechanische Stabilität besitzen, um beispielsweise auch Transporte schadenfrei zu überstehen.

Zur Herstellung der leichten, flächigen Formteile nach dem erfindungsgemäßen Verfahren werden die flächigen Gebilde, vorzugsweise die Schaumstoffplatten, mit der wäßrigen Dispersion oder Emulsion aus der NCO-Gruppen aufweisenden organischen Verbindung oder einer Mischung aus NCO-Gruppen aufweisenden organischen Verbindungen behandelt. Die wirksame Menge der NCO-Gruppen aufweisenden organischen Verbindung läßt sich für ein bestimmtes poröses Material leicht durch einen Vorversuch ermitteln.

Die wäßrige Dispersion oder Emulsion der NCO-Gruppen aufweisenden organischen Verbindung wird auf das flächige Gebilde aus Fasermaterial so aufgetragen, daß die Oberfläche der Einzelfasern benetzt werden und gegebenenfalls störende Molekülgruppen der Faseroberfläche mit der Isocyanatverbindung in Reaktion treten können. Nicht erforderlich ist, daß das Fasermaterial oder die Oberfläche der Schaumstoffplatten freie mit NCO-Gruppen reaktive Reste aufweisen, da die Isocyanatgruppen überwiegend durch die Einwirkung von Wasser in Polyharnstoffgruppen übergeführt werden.

Die Behandlung der flächigen Gebilde aus Fasermaterial oder der offenzelligen Schaumstoffe, die bereits endgültig geformt sein können oder vorzugsweise noch plattenförmig sind und anschließend zum Formteil verformt werden, mit der wäßrigen Dispersion oder Emulsion aus den Isocyanatverbindungen kann nach bekannten Methoden, wie z.B. durch Bestreichen, Besprühen, Aufrakeln, Tränken u.a. erfolgen. Nach der vorzugsweise angewandten Ausführungsform werden die porösen, flächigen Materialien durch Eintauchen in ein Bad bei Temperaturen von zweckmäßigerweise 10 bis 60°C, vorzugsweise 18 bis 30°C mit einer solchen Menge der wäßrigen Dispersion oder Emulsion getränkt, daß der NCO-Gehalt 1 bis 300 Gew.%, vorzugsweise 5 bis 240 Gew.%, bezogen auf das Gewicht des porösen flächigen Materials beträgt. Durch anschließendes Ausdrücken der Flüssigkeit wird der NCO-Gehalt so eingestellt, daß das behandelte, offenzellige Material vor Aushärtung der Isocyanatgruppen einen NCO-Gehalt von 1 bis 70 Gew.%, vorzugsweise von 5 bis 60 Gew.%, bezogen auf das Gewicht des porösen Materials besitzt. Eines Auspressens überschüssiger wäßriger Dispersion oder Emulsion bedarf es selbstverständlich dann nicht, wenn nach anderen Methoden, z.B. durch Besprühen, die erforderliche wirksame Menge direkt aufgebracht wird.

Sofern die flächigen, porösen Materialien bereits die Raumform des Formteils besitzen, können diese nach der Behandlung mit der wäßrigen Dispersion oder Emulsion der NCO-Gruppen aufweisenden organischen Verbindungen bei Raumtemperatur oder erhöhter Temperatur gelagert werden, wobei die Isocyanatverbindungen reagieren und die Produkte aushärten.

Zur Verkürzung der Abbinde- und Fertigungszeiten hat es sich jedoch als zweckmäßig erwiesen, die so behandelte flächigen, porösen Materialien mit mindestens einem Katalysator oder vorzugsweise einer wäßrigen oder alkoholischen Katalysatorlösung zur Beschleunigung der Isocyanat-polyadditionsreaktion zu tränken. Geeignete Katalysatoren sind beispielsweise die bereits zur Herstellung der Polyurethan-Schaumstoffe beschriebenen tertiären Amine, die üblicherweise in Mengen von 0,001 bis 1,0 Gew.%, bezogen auf den NCO-Gehalt der behandelten porösen Materialien eingesetzt werden.

Nach der vorzugsweise zur Anwendung kommenden Verfahrensweise werden die mit wäßrigen Dispersionen oder Emulsionen aus NCO-Gruppen aufweisenden Verbindungen und vorzugsweise Polyurethankatalysatoren behandelten porösen Materialien, insbesondere offenzelligen Polyurethan-Schaumstoffplatten zur Formgebung in ein Formwerkzeug aus Kunststoff oder Metall, vorzugsweise ein temperierbares Formwerkzeug aus Metall, z.B. Stahl oder Gußaluminium, eingelegt und bei einer Temperatur von 25 bis 180°C, vorzugsweise 110 bis 180°C drucklos oder vorzugsweise unter einem Druck von 1 bis 50 bar (100 - 5000 kPa), insbesondere 3 bis 10 bar in einem Zeitraum von 0,5 bis 15 Minuten, vorzugsweise 1 bis 10 Minuten verformt, wobei die Isocyanatgruppen ausreagieren und danach das erhaltene Formteil entformt.

Die flächigen Formteile, insbesondere solche mit einer komplizierten Raumform, werden vorzugsweise in einem diskontinuierlichen Prozeß hergestellt. Formteile mit relativ einfachen Raumformen, wie z.B. Platten, Profilplatten, Schalen u.a. können jedoch auch nach kontinuierlichen Verfahren hergestellt werden.

Die nach dem erfindungsgemäßen Verfahren hergestellten flächigen Formteile, die vorzugsweise eine Dichte von 0,015 bis 0,25 g/cm³ und eine Dicke von 0,1 bis 40 mm besitzen, können direkt industriell z.B. zur Wärme- und Schallisolation oder als Motorraumabdeckung verwertet werden.

Falls es gewünscht wird, können die behandelten, flächigen, porösen Materialien in dem Formwerkzeug gleichzeitig mit der Verformung oder danach in einer separaten Stufe zusätzlich ein- oder beidseitig mit Versteifungs- und/oder Dekormaterial versehen werden, wobei mindestens eine Deckschicht aus einem Wasserdampf durchlässigen Material bestehen muß, falls die Formgebung und Beschichtung gleichzeitig durchgeführt wird. Die Versteifungs- und/ oder Dekormaterialien werden hierzu in das Formwerkzeug eingelegt und mit Hilfe von beispielsweise Sprüh-, Kaschier- oder Schmelzkleber unter Druck mit den porösen Materialien verbunden.

Als Versteifungsmaterialien oder nicht- oder direkt eingefärbte oder bedruckte Dekormaterialien seien beispielhaft genannt: Gewebe oder Vliese aus Glas-, Kohle-, Kunststoff- oder Textilfasern, Folien aus Metall, wie z.B. Aluminium, Kupfer, Messing, Gold oder Stahlblech bis 0,3 mm Dicke, Polyvinylchlorid, Acrylnitril-Butadien-Styrol-polymerisaten, Polyamid, Polyester, Polyethylen, Polypropylen, holzmehlgefülltem Polypropylen, Celluloseestern und -mischestern, Karton oder Papierbahnen.

Die nach dem erfindungsgemäßen Verfahren hergestellten leichten, flächigen Formteile finden Verwendung als selbsttragende Verkleidungsteile, Versteifungsteile oder Formkörper in der Schienenfahrzeug-, Kraftfahrzeug- und Flugzeugindustrie, z.B. als Dachhimmel, Türen- und Wandverkleidungen, Armaturentafeln, -bretter und Motorraumabdeckungen. Die Produkte werden jedoch auch in der Möbelindustrie, der Phono- und Fernsehtechnik und der Bauindustrie als Verkleidungen eingesetzt.

### Beispiel 1

### a) Herstellung einer wäßrigen Polyisocyanat-Emulsion

25 Gew.-Teile Emulgator, bestehend aus einer 10 gew.%igen wäßrigen Lösung aus 1 Gew.-Teil eines Polyvinylpyrrolidons mit einem mittleren Molekulargewicht von 360.000 und 12 Gew.-Teilen eines Polyoxyethylen-glykols mit einem mittleren Molekulargewicht von 9000, wurden in 125 Gew.-Teilen Wasser gelöst und in der erhaltenen Lösung unter Rühren mittels eines hochtourigen Rührwerks (z.B. Fabrikat ®Tornado oder ®Turrax oder eines statischen Mischers) 50 Gew.-Teile einer Mischung aus Diphenylmethan-diisocyanaten und Polyphenyl-polymethylen-polyisocyanaten (Roh-MDI) mit einem NCO-Gehalt von 31 Gew.% in 30 bis 120 Sekunden emulgiert.

Die wäßrige Roh-MDI-Emulsion besaß unmittelbar nach der Herstellung einen NCO-Gehalt von ungefähr 15 Gew.% und konnte über einen Zeitraum von 6 Stunden verarbeitet werden.

### b) Herstellung eines hydrophilen Polyurethan-Schaumstoffes

### Komponente A:

Mischung aus
- 15 Gew.-Teilen: eines Polyoxyethylen-glykols mit einer Hydroxylzahl von 200,
- 40 Gew.-Teilen: eines Polyoxypropylen-polyols mit einer Hydroxylzahl von 400, hergestellt unter Verwendung einer Sucrose-Glycerinmischung als Startermoleküle (®Lupranol 3321),
- 10 Gew.-Teilen: eines mit Glycerin gestarteten Polyoxypropylen-triols mit einer Hydroxylzahl von 400,
- 20 Gew.-Teilen: Diethylenglykol,
- 15 Gew.-Teilen: eines mit Glycerin gestarteten Polyoxypropylen-polyoxyethylen-triols mit endständigen Ethylenoxideinheiten und der Hydroxylzahl 28,
- 6 Gew.-Teilen: Wasser,
- 0,4 Gew.-Teilen: eines Silikonöls (®Tegostab B 8408 der Firma Goldschmidt, Essen) und
- 0,4 Gew.-Teilen: Dimethylcyclohexylamin.

### Komponente B:

Mischung aus Diphenylmethan-diisocyanaten und Polyphenyl-polymethylen-polyisocyanaten mit einem NCO-Gehalt von 31 Gew.%.

Die Komponenten A und B wurden im Gewichtsverhältnis 100:98, entsprechend einem NCO-Index von ungefähr 50, nach dem one shot-Verfahren in einem Mehrkomponentenmischkopf bei Raumtemperatur (23°C) intensiv gemischt und in einem offenen Formwerkzeug zu einem Schaumstoffblock mit den Abmessungen 30x30x30 cm verschäumt.

Der erhaltene, offenzellige, flexible Polyurethanschaumstoff besaß eine Dichte von 0,025 g/cm³.

### c) Herstellung des Formteils

Aus dem Polyurethan-Schaumstoffblock, hergestellt nach Beispiel 1b, wurde eine Schaumstoffplatte mit stufenweise ansteigender Dicke von 0,1 bis 10 mm geschnitten. Diese wurde mit ungefähr 300 g wäßriger Roh-MDI-Emulsion nach Beispiel 1a pro 1000 cm³ Schaumstoff getränkt, anschließend die überschüssige Roh-MDI-Emulsion abgequetscht, so daß die behandelte Polyurethan-Schaumstoffplatte einen NCO-Gehalt von 10 Gew.% besaß.

Die Schaumstoffplatte wurde danach mit Dimethylcyclohexylamin besprüht, nach 60 Sekunden in ein auf 120°C temperiertes Formwerkzeug aus Edelstahl eingebracht und unter einem Druck von ungefähr 500 kPa (5 bar) in 10 Minuten verformt.

An dem Formteil, das eine Stunde bei 105°C getempert werden konnte ohne seine Prägestruktur zu verlieren, wurden folgende mechanischen Eigenschaften gemessen:

| Dicke | [mm] | 0,1 bis 10 (stufenweise ansteigend) |
|---|---|---|
| Dichte nach DIN 53 420 | [g/cm³] | 0,05 |
| Zugfestigkeit nach DIN 53 571 | [k·Pa] | 200 |
| Bruchdehnung nach DIN 53 571 | [%] | 21 |
| Stauchhärte bei 40 % Verformung nach DIN 53 571 | [k·Pa] | 77 |
| Wärmebiegefestigkeit nach DIN 53 424 | [°C] | 128 |

### d) Vergleichsbeispiel

Eine unbehandelte Schaumstoffplatte mit einer Dicke von 10 mm, geschnitten aus dem Schaumstoffblock nach Beispiel 1b, wurde in das auf 180°C temperierte Edelstahlformwerkzeug eingebracht und unter einem Druck von ungefähr 500 kPa (5 bar) in 10 Minuten verformt.

Das erhaltene Formteil verlor bei einer einstündigen Temperung bei 105°C seine Prägestruktur vollständig.

## Patentansprüche

1. Verfahren zur Herstellung von leichten, flächigen Formteilen durch Behandeln von flächigen, porösen Materialien mit einer wirksamen Menge einer NCO-Gruppen aufweisenden organischen Verbindung und Aushärten lassen der Isocyanatverbindung gegebenenfalls unter Formgebung, dadurch gekennzeichnet, daß man die NCO-Gruppen aufweisende organische Verbindung in Form einer wäßrigen Dispersion oder Emulsion einsetzt.

2. Verfahren zur Herstellung von leichten, flächigen Formteilen durch Behandeln von flächigen, porösen Materialien mit einer wirksamen Menge einer NCO-Gruppen aufweisenden organischen Verbindung und Aushärten lassen der Isocyanatverbindung gegebenenfalls unter Formgebung, dadurch gekennzeichnet, daß man offenzellige Schaumstoffe mit einer wäßrigen Dispersion oder Emulsion aus mindestens einem organischen Polyisocyanat tränkt und anschließend das oder die Polyisocyanate vernetzt.

3. Verfahren nach Anspruch 1 oder 2, dadurch gekennzeichnet, daß man als flächige, poröse Materialien offenzellige, hydrophile Schaumstoffe verwendet.

4. Verfahren nach Anspruch 1 oder 2, dadurch gekennzeichnet, daß man als flächige, poröse Materialien flexible oder halbharte, offenzellige Polyurethan-Schaumstoffe mit Dichten von 0,010 bis 0,120 g/cm³ verwendet.

5. Verfahren nach Anspruch 1 oder 2, dadurch gekennzeichnet, daß die wäßrigen Dispersionen oder Emulsionen, bezogen auf das Gesamtgewicht, enthalten
5 bis 70 Gew.% mindestens eines organischen Polyisocyanates oder/und modifizierten organischen Polyisocyanates,
0 bis 28 Gew.% mindestens eines Emulgators und
im übrigen Wasser, so daß die Summe der Bestandteile 100 Gew.% ergibt.

6. Verfahren nach Anspruch 1 oder 2, dadurch gekennzeichnet, daß die wäßrige Emulsion besteht aus
5 bis 70 Gew.%, vorzugsweise 15 bis 40 Gew.%, einer Mischung aus Diphenylmethan-diisocyanaten und Polyphenyl-polymethylen-polyisocyanaten mit einem NCO-Gehalt von 28 bis 32 Gew.%,
0 bis 28 Gew.%, vorzugsweise 0 bis 15 Gew.%, eines Emulgators aus der Gruppe der Polyoxyalkylen-polyole, Polyvinylpyrrolidone und/oder Polyvinylalkohole und
einer solchen Menge Wasser, daß die Summe der Bestandteile 100 Gew.% ergibt.

7. Verfahren nach Anspruch 1 oder 2, dadurch gekennzeichnet, daß man die flächigen, porösen Materialien, vorzugsweise offenzelligen Polyurethan-Schaumstoffe, mit einer solchen Menge wäßriger Polyisocyanat-Dispersion oder -Emulsion behandelt, daß diese vor Aushärtung der Isocyanatgruppen einen NCO-Gehalt von 1 bis 70 Gew.%, bezogen auf das Gewicht der porösen Materialien, besitzen.

8. Verfahren nach Anspruch 1 oder 2, dadurch gekennzeichnet, daß man die mit einer wirksamen Menge wäßriger Polyisocyanat-Dispersion oder -Emulsion behandelten flächigen, porösen Materialien bei einer Temperatur von 25 bis 180°C aushärten läßt.

9. Verfahren nach Anspruch 1 oder 2, dadurch gekennzeichnet, daß man die mit einer wirksamen Menge einer wäßrigen Emulsion aus einer Mischung aus Diphenylmethan-diisocyanaten und Polyphenyl-polymethylen-polyisocyanaten behandelten, flexiblen oder halbharten, offenzelligen Polyurethan-Schaumstoffe bei einer Temperatur von 25 bis 180°C und einem Druck von 100 bis 5000 kPa (1 bis 50 bar) unter Formgebung aushärten läßt.

## Claims

1. A process for the production of lightweight, two-dimensional moldings by treating two-dimensional, porous materials with an effective amount of an organic compound containing NCO groups, and allowing the isocyanate compound to cure, if desired with shaping, which comprises employing the organic compound containing NCO groups in the form of an aqueous dispersion or emulsion.

2. A process for the production of lightweight, two-dimensional moldings by treating two-dimensional, porous materials with an effective amount of an organic compound containing NCO groups, and allowing the isocyanate compound to cure, if desired with shaping, which comprises impregnating open-cell foams with an aqueous dispersion or emulsion of at least one organic polyisocyanate and subsequently crosslinking the polyisocyanate(s).

3. A process as claimed in claim 1 or 2, wherein the two-dimensional, porous materials used are open-cell, hydrophillic foams.

4. A process as claimed in claim 1 or 2, wherein the two-dimensional, porous materials used are flexible or semi-rigid, open-cell polyurethane foams having densities of from 0.010 to 0.120 g/cm³.

5. A process as claimed in claim 1 or 2, wherein the aqueous dispersions or emulsions contain, based on the total weight,
from 5 to 70% by weight of at least one organic polyisocyanate and/or modified organic polyisocyanate,
from 0 to 28% by weight of at least one emulsifier, and the remainder water, so that the sum of the constituents is 100% by weight.

6. A process as claimed in claim 1 or 2, wherein the aqueous emulsion comprises
from 5 to 70% by weight, preferably from 15 to 40% by weight, of a mixture of diphenylmethane diisocyanates and polyphenylpolymethylene polyisocyanates having an NCO content of from 28 to 32% by weight,
from 0 to 28% by weight, preferably from 0 to 15% by weight, of an emulsifier from the group consisting of polyoxyalkylene-polyols, polyvinylpyrrolidones and/or polyvinyl alcohols, and
an amount of water such that the sum of the constituents is 100% by weight.

7. A process as claimed in claim 1 or 2, wherein the two-dimensional, porous materials, preferably open-cell polyurethane foams, are treated with such an amount of aqueous polyisocyanate dispersion or emulsion that the latter has an NCO content of from 1 to 70% by weight, based on the weight of the porous materials, before curing of the isocyanate groups.

8. A process as claimed in claim 1 or 2, wherein the two-dimensional, porous materials treated with an effective amount of aqueous polyisocyanate dispersion or emulsion are cured at from 25 to 180°C.

9. A process as claimed in claim 1 or 2, wherein the flexible or semi-rigid, open-cell polyurethane foams treated with an effective amount of an aqueous emulsion of a mixture of diphenylmethane diisocyanates and polyphenylpolymethylene polyisocyanates is cured at from 25 to 180°C and at from 100 to 5000 kPa (from 1 to 50 bar) with shaping.

## Revendications

1. Procédé pour la fabrication de pièces moulées planiformes légères par traitement de matières poreuses planiformes à l'aide d'une quantité efficace d'un composé organique contenant des groupes NCO et durcissement de l'isocyanate éventuellement avec façonnage, caractérisé en ce que l'on met en oeuvre le composé organique contenant des groupes NCO à l'état de dispersion ou d'émulsion aqueuse.

2. Procédé pour la fabrication de pièces moulées planiformes légères par traitement de matières poreuses planiformes à l'aide d'une quantité efficace d'un composé organique contenant des groupes NCO et durcissement de l'isocyanate éventuellement avec façonnage, caractérisé en ce que l'on imprègne des mousses à cellules ouvertes par une dispersion ou émulsion aqueuse d'au moins un polyisocyanate organique puis on réticule le ou les polyisocyanates.

3. Procédé selon la revendication 1 ou 2, caractérisé en ce que l'on utilise, en tant que matières poreuses planiformes, des mousses hydrophiles à cellules ouvertes.

4. Procédé selon la revendication 1 ou 2, caractérisé en ce que l'on utilise, en tant que matières poreuses planiformes, des mousses de polyuréthannes à cellules ouvertes, souples ou semi-dures, à des densités de 0,010 à 0,120 g/cm³.

5. Procédé selon la revendication 1 ou 2, caractérisé en ce que les dispersions ou émulsions aqueuses contiennent, sur leur poids total :
5 à 70 % en poids d'au moins un polyisocyanate organique et/ou d'un polyisocyanate organique modifié,
0 à 28 % en poids d'au moins un agent émulsionnant, et, pour le solde à 100 % en poids, de l'eau.

6. Procédé selon la revendication 1 ou 2, caractérisé en ce que l'émulsion aqueuse consiste en :
5 à 70 % en poids, de préférence 15 à 40 % en poids, d'un mélange de diphénylméthane-diisocyanates et de polyphényl-polyméthylène-polyisocyanates à une teneur en NCO de 28 à 32 % en poids,
0 à 28 % en poids, de préférence 0 à 15 % en poids, d'un agent émulsionnant du groupe des polyoxyalkylène-polyols, des polyvinylpyrrolidones et/ou des alcools polyvinyliques, et, pour le solde à 100 % en poids, de l'eau.

7. Procédé selon la revendication 1 ou 2, caractérisé en ce que l'on traite les matières poreuses planiformes, de préférence des mousses de polyuréthanne à cellules ouvertes, par une dispersion ou émulsion aqueuse de polyisocyanate en quantité telle que, avant le durcissement des groupes isocyanate, les matières poreuses contiennent de 1 à 70 % de leur poids de NCO.

8. Procédé selon la revendication 1 ou 2, caractérisé en ce que l'on fait durcir, à une température de 25 à 180 degrés C, les matières poreuses traitées par une quantité efficace d'une dispersion ou émulsion aqueuse de polyisocyanate.

9. Procédé selon la revendication 1 ou 2, caractérisé en ce que l'on fait durcir les mousses de polyuréthannes à cellules ouvertes, souples ou semi-dures, traitées par une quantité efficace d'une émulsion aqueuse d'un mélange de diphénylméthane-diisocyanates et de polyphényl-polyméthylène-polyisocyanate, à une température de 25 à 180 degrés C sous une pression de 100 à 5000 kPa (1 à 50 bar), avec façonnage.
